# EUROPEAN PATENT SPECIFICATION

(11) **EP 2 587 933 B1**
(45) Date of publication and mention of the grant of the patent: **06.05.2015**
(21) Application number: 11743457.1
(22) Date of filing: 30.06.2011
(51) Int. Cl.: A23G 9/14, A23G 9/34, A23G 9/42, A23G 9/40

(54) **PROCESS FOR THE PREPARATION OF A FROZEN DAIRY-BASED PRODUCT**
VERFAHREN FÜR DIE ZUBEREITUNG EINES GEFRORENEN MILCHPRODUKTES
PROCÉDÉ POUR LA PRÉPARATION D'UN PRODUIT LAITIER GLACÉ

(30) Priority: 30.06.2010 DK 201070308
(43) Date of publication of application: 08.05.2013
(73) Proprietor: Svaneke Is ApS, 3740 Svaneke (DK)
(72) Inventor: BOHN, Jonas, DK-3740 Svaneke (DK)
(74) Representative: Heebøll-Nielsen, Anders
(86) International application number: PCT/EP2011/061084
(87) International publication number: WO 2012/001140

(56) References cited:
- EP-A1- 0 559 316
- EP-A1- 1 597 975
- WO-A1-00/53029
- WO-A1-02/080693
- WO-A1-2004/016094
- WO-A1-2005/070225
- JP-A- 2001 275 575
- US-A- 5 175 013
- US-A- 5 919 510

## Description

### FIELD OF THE INVENTION

The present invention relates to a process for the preparation of a frozen dairy-based product from naturally-occurring ingredients.

### BACKGROUND OF THE INVENTION

The quality of frozen dairy-based products such as ice cream is typically determined by the flavour, body and texture, where body represents the overall quality (e.g., mouthfeel) and the texture reflects the quality of specific parameters (e.g., sandiness) (Marshall et al., 2003). For the food industry, it is also important that the quality of a product is retained over time. Particularly for frozen dairy-based products, the growth of ice crystals limits the shelf-life of the product.

Traditionally, frozen dairy-based products such as ice cream products contain stabilisers and emulsifiers in order to provide a desired quality product. Stabilisers are typically added in order to provide softness and uniformity, secure a longer time for thawing and reduce formation of ice crystals, while emulsifiers are added in order to provide uniformity, scoopability and provide a more simple process. Furthermore milk powder is frequently used in order to increase the solids content and thereby improve the mouthfeel and reduce sandiness. However, in today's health conscious environment it would be desirable to be able to provide a frozen dairy-based product which is based solely on naturally occurring ingredients, is free from any artificial ingredients and which nonetheless provides an excellent high quality product.

WO 98/09534 A discloses a frozen aerated product having no added emulsifier and preferably no added stabiliser and having a fat content of from 6 to 18 % as well as a process for the preparation thereof.

EP 1913819 A1 discloses a frozen aerated confection and methods for production thereof, wherein said confection comprises water, a fat component in an amount of 1 to 15 % by weight, wherein greater than 20 % and less than 35 % by weight of the fatty acids in the fat component are polyunsaturated, and less than 65 % by weight of the fatty acids are saturated, mammalian milk protein, and sweetener, and wherein the frozen confection contains less than 0.04 % emulsifier by weight of the frozen confection.

JP 2001275575 A discloses a method for producing ice cream, said process comprising preparing an ice cream mix by mainly including nonfat milk solids, milk fat, a sweetener, and an egg ingredient without formulating a stabiliser and emulsifier, to adjust the milk fat proportion to 10-18 % by weight, homogenising the resultant ice cream mix with a homogenizer under a homogenising pressure of ≥ 300 gkf/cm2, and freezing the resultant mix at a freezing temperature of ≤ -3 °C but > -5 °C.

WO 02/080693 A1 describes a process for the preparation of a frozen dairy-based product comprising a sweetener composition comprising sucrose and maltose.

WO 2000/53029 relates to relates to ice confections, in particular to ice confections containing an antifreeze protein and addresses the problem that ice confections products tend to be rather wet at their surface, relatively soft to eat and not long lasting in the mouth. WO 2000/53029 finds that the inclusion of specific antifreeze proteins into ice confections can result in the formation of a strong, close-packed continuous network of ice crystals within the ice confection. As a result the ice confection becomes hard and once of a certain dimension becomes difficult to bite or chew, so that it must be sucked, exactly like a boiled sweet of the confectionery industry. However, such characteristics are not generally considered desirable for an ice cream product.

EP 0559316 provides processes for producing ice cream. In its broadest terms the process employs a recipe comprising 5 to 18% of milk fat such as cream, butter, butter oil and the like, vegetable fat and oil to be usually used for production of an ice cream or a mixture thereof, 3 to 12 % of non-fat milk solids such as skim milk, skim milk powder and the like, 8 to 20 % of sugar such as sugar, high fructose corn syrup and the like. The ice cream may comprise a small amount of a stabiliser, an emulsifier, a colour and flavours. EP 0559316, however, does not disclose the production of ice cream products without such additives.

US 5,175,013 discloses a composition of ingredients without added stabilising gums, which is capable of being processed into an aerated frozen dairy dessert product, frozen dairy dessert products and a method of making these. However, the ice cream of US 5,175,013 requires a hydrolysed starch with a dextrose equivalent value of less than about 36, which should be considered a stabiliser, or the presence of a milk powder in order to obtain a desired value of heat shock stability.

WO 2004/016094 provides frozen dessert compositions containing a starch hydrolysate that includes a mixture of dextrose, maltose, maltotriose, and polysaccharides. The starch hydrolysate provides at least 1% polysaccharides in the frozen dessert composition, and the effect of this is to improve the heat shock resistance. Thus, WO 2004/016094 does not provide an ice cream product that does not contain a stabiliser

WO 2005/070225 discloses a low temperature extrusion process and a device for energy optimised and viscosity adapted micro-structuring of frozen aerated masses. However, no ice cream composition is specified in WO 2005/070225.

There is a need for a process for preparing a frozen dairy-based product, such as an ice cream product, which is based solely on naturally occurring ingredients.

### SUMMARY OF THE INVENTION

It is an object of the invention to provide a process for the preparation of a frozen dairy-based product exhibiting a high-quality body and texture and/or a long-shelf-life without the addition of artificial emulsifiers, artificial stabilisers or milk powder. It is further an object of the invention to provide such a process for the production of a frozen dairy-based product, such as ice cream, wherein the product exhibits an excellent mouthfeel and no sandiness. It is further an object of the invention to provide such a process for the production of a frozen dairy-based product, such as ice cream, wherein the product exhibits a long shelf-life, optionally a longer shelf-life than a product prepared by a different process using the same or similar ingredients and/or a product prepared using artificial stabilizers but the same or similar process steps. In particular, the process is suitable for the preparation of an ice-cream product.

So, in a first aspect the present invention relates to a process for the preparation of an ice cream product, wherein said product does not contain any artificial emulsifiers, stabilisers or milk powder, comprising the steps:
(a) homogenising a premix comprising milk and/or cream, egg ingredients, one or more natural sweeteners and optionally salt and at a temperature in the range of 75 °C to 85 °C and a pressure in the range of 125-175 bar;
(b) cooling the mixture obtained to a temperature in the range 2-10 °C;
(c) optionally adding any natural flavours and/or fruit/vegetable compositions
(d) freezing the resulting mixture at a temperature -3 °C to -10 °C in an ice cream making device defining an inlet and an outlet, by:
   i. feeding the resulting mixture into the inlet,
   ii. mixing the resulting mixture inside the ice cream making device by operating the mixing device such that the resulting mixture is scraped off the inner surface at least every tenth of a seconds (1/10 sec) or wherein the screw rotation rate is higher than 360 rpm, and
   iii. outputting the resulting ice cream product through the outlet; and
(e) subjecting the product of step (d) to freezing at a temperature in the range of -11 °C to - 40 °C.

In another aspect, the present invention relates to an ice-cream product obtainable by such a process, wherein said product contains no artificial emulsifiers, stabilisers or milk powder.

In a particular aspect, the above process is for the preparation of an ice cream product.

These and other aspects of the invention will be described in more details in the following sections.

### DETAILED DISCLOSURE OF THE INVENTION

The present invention relates to a process for the preparation of a an ice cream product exhibiting a high-quality body and texture and/or a long-shelf-life, using only emulsifiers that are present in the natural raw materials, such as, e.g., the casein content of milk, cream and eggs. After a series of tests, it was discovered that by careful selection of the process parameters, it was possible to achieve such a high-quality ice cream based on natural ingredients alone showing no sandiness, fat agglomeration or weak structure as experienced in prior art ice cream products.

### Definitions

Unless otherwise defined herein, all technical or scientific terms used herein have the same meaning as commonly understood by one of ordinary skill in the art (e.g., in frozen dairy-based product manufacture). The term "frozen-dairy based product" as used herein refers to a sweet-tasting fabricated foodstuff intended for consumption in the frozen state, and specifically includes ice cream products.

Unless otherwise stated (e.g., in relation to overrun), percentages described herein refer to percentage by weight of the total composition.

The milk and/or cream ingredients used in the process of the invention include cow's milk and cream such as whole milk, skim-milk, half-and-half and the like, but does not include condensed milk or skim milk, whey, or milk proteins in dry or solid form such as casein, non-fat dry milk and milk-powder. Typically, a milk ingredient has a fat content of 0.1 % by weight up to 5 % by weight, such as 3.5-4 % by weight, and a cream ingredient a fat content of 30 % by weight up to 40% by weight, such as 36-38% by weight. Any combination of milk and cream may also be used.

The term "sugar" as used herein includes any naturally-occurring monosaccharide such sucrose (saccharose), dextrose, fructose and any combination thereof.

The "shelf-life" as used herein refers primarily to the length of time a frozen dairy-based product can be stored without major crystallization and/or iciness. For example, in comparing two ice cream preparations for shelf-life, the ice cream having the lowest amount of ice crystals and/or the lowest growth rate of ice crystals after a pre-determined time of storage under the same conditions has the longer shelf-life. Exemplary and non-limiting storage times include 1 week, 2 weeks, 3 weeks, 1 month, 2 months, 3 months, 4 months, 6 months, 8 months, 12 months, 18 months and 24 months.

Definitions and descriptions of various terms and general techniques used in frozen dairy-based product manufacture can be found in "Ice Cream" (Marshall et al., 2003).

### Specific aspects and embodiments of the invention

In one aspect, the present invention provides a process for the preparation of a an ice cream product, wherein said product does not contain any artificial emulsifiers, stabilisers or milk powder, comprising steps (a) to (e) described above under Summary of the Invention.

In one embodiment, the temperature in step (a) is in the range of 75 °C to 85 °C, such as in the range of about 75 °C to 80 °C, for example about 75 °C or about 80 °C.

In an additional or alternative embodiment, the pressure in step (a) is in the range of 125-175 bar, such as about 130-150 bar, for example about 130 bar or about 150 bar.

In an additional or alternative embodiment, the premix in step (a) is prepared by combining milk and/or cream, and egg ingredients, which are heated to a temperature in the range of about 30 °C to about 70 °C, such as in the range of about 40 °C to about 60 °C, for example about 50 °C, whereupon one or more natural sweeteners are added.

The premix may comprise milk, cream or a mixture of milk and cream. In one embodiment, the premix comprises about 40-60 % by weight, such as about 50% by weight, of milk with a fat content of about 3.5%.

The egg ingredients may comprise egg yolks, egg whites, or both egg yolks and egg whites. In one embodiment, the egg ingredients consist of egg yolks. In one embodiment, the egg ingredients consist of egg whites. In one embodiment, the egg ingredients consist of egg yolks. In one embodiment, the egg ingredients comprise egg yolks and egg whites added together. In one embodiment, the egg ingredients comprise separately added egg yolks and egg whites. In one embodiment, the egg ingredients consist of separately added egg yolks and egg whites.

Salt may be included in the premix and is typically included in the premix in an amount below about 0.05 % by weight, such as from 0.01 to 0.05 % by weight, such as about 0.03% by weight.

The one or more natural sweeteners may comprise a sugar, caramelized sugar, honey, syrup, or any mixture thereof. In one embodiment, the natural sweetener is sucrose. In one embodiment, the natural sweetener is honey. In one embodiment, the natural sweetener is a mixture of sucrose and honey, such as about 10-20 % by weight of sucrose and about 1-2 % by weight of honey in the premix, such as about 15% by weight of sucrose and about 1.5% by weight of honey. In one embodiment, the natural sweetener is not maltose. In one embodiment, the natural sweetener is not provided in the form of corn-syrup, such as High-Maltose Corn Syrup (HMCS).

In an additional or alternative embodiment, the mixture is cooled in step (b) to a temperature in the range of 2-10 °C, such as a temperature in the range of about 4-7 °C, for example about 5 °C. In one embodiment, the mixture is cooled for a period of time in the range of 4-30 hours, such as about 6-24 hours, such as about 12-24 hours, such as about 18-24 hours.

In one embodiment, no natural flavour or fruit/vegetable composition is added in step (c). In one embodiment, a natural flavour is added in step (c), which natural flavour is selected from the group consisting of vanilla, cinnamon, ginger, star anis, chili, mint, chocolate, cocoa, herbs such as rosemary, malt, nuts, almonds, honey, syrup, and any combination thereof. In one embodiment, a fruit/vegetable composition is added in step (c), selected from the group consisting of a fruit paste and a fruit syrup, or a combination thereof, such as blueberry or strawberry-rhubarb. In one embodiment, a combination of one or more preceding natural flavours and one or more fruit/vegetable compositions is added to the mixture in step (c), such as apple-cinnamon. In one embodiment, the fruit/vegetable composition is added to the mixture at about 10 % to about 40 %, such as at about 20 to about 30%, such as at about 25%, by weight.

Steps (a) and (b) may take place in a first vessel, optional step (c) in the first or a second vessel, after which the mixture is transferred to vessel for a dynamic freezing process, which typically takes place in an ice cream freezer, for freezing and aerating the frozen mix. In the context of the present invention the vessel for a dynamic freezing process is also called an ice cream making device.

Accordingly, in an additional or alternative embodiment, step (d) comprises freezing the resulting mixture at a temperature of -3 °C to -10 °C, a temperature in the range of about - 4 °C to about - 8 °C, such as about -5 °C to about - 6 °C. In one embodiment, in step (d), the mixture is frozen for a period of time of at least 2 hours, preferably in the range of about 4-24 hours.

In an additional or alternative embodiment, the freezing in step (d) is performed in a screw extruder at a screw rotation rate higher than 360 rpm, such as from about 400 to about 700 rpm, such as at least 400 rpm, such as about 550 to about 600 rpm, such as from about 570 to about 580 rpm, such as about 575 rpm, such as 576 rpm. In one embodiment, the shear rate in step (d) is at least about 550 rpm, such as from about 570 to about 580 rpm, to allow for a reduced residence time on the inner surface of the ice cream making device and the egg ingredients in step (a) are separately added egg yolks and egg whites, providing an improved, non-buttery and non-greasy mouthfeel. In one embodiment, the freezing in step (d) is performed in a screw extruder at a screw rotation rate higher than 50 Hz, such as from about 60 to about 100 Hz, such as about 75 to about 85 Hz, such as about 80 Hz.

In an additional or alternative embodiment, the product of step (d) is in step (e) subjected to freezing at a temperature in the range of -11 °C to - 40 °C, such as at a temperature in the range of about -12 °C to about - 35 °C, such as about -15 °C to about - 30 °C, such as about -18 °C to about - 25 °C. In an alternative embodiment, step (e) comprises "blast freezing", typically at a temperature from about -30 °C to about -45 °C, with a high windchill effect.

In one embodiment, the egg ingredients comprise separately added egg yolks and egg whites.

In one embodiment, the premix in step (a) is prepared by combining milk and/or cream, such as milk (3.5% fat content), and egg ingredients, such as separately added egg yolks and egg whites, and the combination heated to a temperature in the range of about 40 °C to about 60 °C, such as about 40 °C, whereupon one or more natural sweeteners are added. In one embodiment, the mixture is then homogenised at about 75-80 °C and about 130-150 bar.

In one embodiment, in step (b) the mixture is cooled to a temperature in the range 4-7 °C, such as about 5 °C, for a period of time in the range of 4-30 hours, such as about 6-24 hours, such as about 12-24 hours, such as about 18-24 hours.

In one embodiment, in step d) the mixture is then cooled to a temperature in the range of about -4 °C to about - 8 °C for a period of time in the range of about 4-24 hours.

In one embodiment, the freezing in step (d) is performed in an ice cream making device (see description below) which comprises a mixing device which is rotated inside the mixing device such as a screw extruder, at a rotation rate of about 550 to about 600 rpm, such as from about 570 to about 580 rpm, such as about 575 rpm, such as 576 rpm.

The ice cream making device defines an inlet and an outlet which are different from one another. Accordingly during use, the resulting mixture in through from the inlet, further through the ice cream making device and finally out through the outlet.

The cross-sectional shape of the ice cream making device (in a direction transverse to the longitudinal and/or flow direction of the ice cream making device) may be round, such as circular. In one embodiment, the ice cream making device has a diameter in the range of 50-5000 mm, such as in the range 100-1000 mm, such as 100 mm, such as 200 mm, such as 300 mm, such as 400 mm, such as 500 mm.

In one embodiment, the length of the ice cream making device may be at least 500 mm, such as at least 1000 mm, such as at least 5000 mm, such as in the range 500 mm to 5000 mm, such as in the range 1000 to 2000 mm.

The chamber defined by the ice cream making device may have a volume of at least 500 cm³, such as at least 5000 cm³, such as at 50,000 cm³, such as at 500,000 cm³, such as at 5,000,000 cm³, such as in the range 1000 cm³ to 100,000 cm³, such as in the range 10,000 to 50,000 cm³.

In one embodiment, the step "d) freezing the resulting mixture" comprises the step of feeding the resulting mixture out through the outlet at a velocity below 1.2 mm/s, such as below 1.0 mm/s, such as below 0.8 mm/s, such as below 0.6 mm/s, such as below 0.4 mm/s, such as in the range 0.2 to 1.0 mm/s, such as in the range 0.5-0.9 mm/s. These velocities may in one embodiment be achieved in that part of the ice cream making device, where one or more ice cream mixing devices are provided - see below.

In one embodiment, the step "d) freezing the resulting mixture" comprises the step of feeding the resulting mixture out through the outlet at a volume per time unit in the range of 200 mm³/s to 1200 mm³/s, such as 300 mm³/s to 1000 mm³/s, such as 300 mm³/s, such as 400 mm³/s, such as 500 mm³/s, such as 600 mm³/s, such as 700 mm³/s, such as 800 mm³/s, such as 900 mm³/s.

In one embodiment, the ice cream making device comprises one or more pumps which are adapted and operated to pump the resulting mixture from the inlet to the outlet. In one embodiment, the movement of the resulting mixture is only achieved by means of these pumps. In one embodiment, a upstream pump may be provided upstream the inlet. Alternatively, or as a supplement, a downstream pump may be provided downstream the outlet.

If the inlet and/or the outlet does/do not have the same cross-sectional area as the cross-sectional area of the ice cream making device (in a direction transverse to the flow direction), then it will be appreciated that the velocity in the inlet and/or the outlet will be different from the velocity inside the ice cream making device.

In one embodiment, the ice cream making device comprises a mixing device. In the latter embodiment, the step "ii) mixing the resulting mixture inside the ice cream making device" comprises the step of operating the mixing device so as to move the resulting mixture at a velocity of at least 1500 mm/s along an inner surface of the ice cream mixing device, such as at least 1800 mm/s, such as at least 2000 mm/s, such as at least 2500 mm/s, such as at least 3000 mm/s, such as at least 3500 mm/s, such as in the range 1500 to 3500 mm/s, such as in the range 1800 to 3200 mm/s.

In one embodiment, the mixing device is adapted to move the resulting mixture in a direction which defines no component in the longitudinal direction i.e. the mixing device is only capable of moving the resulting mixture along the circumference of the inner surface. Alternatively, the mixing device may be adapted to move the resulting mixture in both the longitudinal direction and in the circumferential direction, whereby the mixing device causes the resulting mixture to be moved in a helical direction.

In order to move the resulting mixture along the circumference, the mixing device may comprise one or more mixing arms, such as one, such as two, such as three, such as four, such as five, such as six. The mixing arms may be extend from a shaft which is rotatable inside the ice cream making device. In one embodiment, the shaft is hollow. It will be appreciated that in some embodiments, the rotational axis of the shaft coincides with the center axis of the cylinder defined by the ice cream mixing device. Each of these mixing arms may define an end surface which when the shaft is rotated is caused to move along the inner surface of the ice cream making device. These arms may be adapted and arranged to move the resulting mixture along the inner surface as specifies above.

In one embodiment, the step of "ii) mixing the resulting mixture inside the ice cream making device" comprises the step of operating the mixing device such that the resulting mixture is scraped off the inner surface at least every tenth of a second (1/10 sec), such as at least every fifteenth of a second (1/15 sec), such as every eighteenth of a second (1/18 sec), such as every twentieth of a second (1/20 sec), such as every twenty-fifth of a second (1/25 sec), such as every thirtieth of a second (1/30 sec), such as every fortieth of a second (1/40 sec), such as between every fifteenth of a second (1/15 sec) and every fortieth of a second (1/40 sec), such as between every eighteenth of a second (1/18 sec) and every thirtieth of a second (1/30 sec). By "scraped off" shall be understood that the mixing arms causes the resulting mixture which is in direct contact with the inner surface of the ice cream making device to be moved away from this inner surface whereby other parts of the resulting mixture is allowed to flow into contact with the inner surface. The effect is that the resulting mixture is prevented from being in contact with the inner surface for an unwanted long period of time whereby formation of ice crystals may be prevented or reduced.

In one embodiment, the ice cream making device is adapted to add air to the resulting mixture so as to increase the volume of the ice cream (relative to the amount of resulting mixture added). In one embodiment the ice cream making device is adapted to air to the resulting mixture such that the air constitutes up to 80 percent of the volume of the ice cream, such as up to 60 percent, such as up to 40 percent, such as up to 20 percent, such as in the range 20-30 percent, such as 23 percent.

In one embodiment, the process provides an ice cream product comprising at least 3 % by weight of fat (mainly butterfat), such as 10 to 20 % by weight, such as 12 to 18 % by weight, such as about 15% by weight of fat.

In another embodiment, the present invention provides a premix for use in preparing an ice cream product by a continuous process, said pre-mix comprising milk and/or cream, egg ingredients, salt and one or more natural sweeteners.

In one embodiment, the pre-mix comprises:
(a) 40-60 % by weight, such as about 50% by weight, of milk with a fat content of about 3.5%;
(b) 2-10 % by weight, such as 2-5 % by weight, such as 3-4% by weight of egg ingredients;
(c) 0.0 to 0.05 % by weight of salt; and
(d) 10 to 35 % by weight, such as 10 to 25% by weight of natural sweetener.

In separate and specific embodiments, the egg ingredients consist of egg whites, egg yolks, or both egg whites and egg yolks.

In other separate and specific embodiments, the pre-mix consists of milk, egg ingredients, natural sweetener and optionally salt.

In one embodiment, the natural sweetener is a mixture of sucrose and honey, such as about 10-20 % by weight of sucrose and about 1-2 % by weight of honey in the premix, such as about 15% by weight of sucrose and about 1.5% by weight of honey.

In one embodiment, the premix consists of said ingredients (a) to (d), optionally wherein the natural sweetener is a mixture of sucrose and honey.

In another embodiment, the invention provides a process, optionally continuous, for the preparation of an ice cream product, comprising the steps:
(a) homogenising the premix of the invention at a temperature in the range of about 75 °C to about 85 °C and a pressure in the range of about 125-175 bar;
(b) cooling the mixture obtained to a temperature in the range 2-10 °C;
(c) optionally adding any natural flavours and/or fruit/vegetable compositions;
(d) freezing the resulting mixture at a temperature of about -3 °C to about -10 °C (optionally with shear) in an ice cream making device defining an inlet and an outlet, by:
   i. feeding the resulting mixture into the inlet,
   ii. mixing the resulting mixture inside the ice cream making device, and
   iii. outputting the resulting ice cream product through the outlet; and
(e) subjecting the product of step d) to freezing at a temperature in the range of-11 °C to about - 40 °C.

In another aspect, the present invention provides for an ice cream product, wherein said product contains no artificial emulsifiers, stabilisers or milk powder and is obtainable by the process according to any of the preceding aspects and/or embodiments or any combination thereof.

### EXAMPLE 1

The following describes production of ice cream with vanilla, apple-cinnamon, blueberry, or strawberry-rhubarb flavour.

A pre-mix of all ingredients except for the flavouring was homogenized at a temperature of 60 °C and a pressure of 100 bar, and pasteurized. After cooling, flavouring was added, and the mixture subjected to cooling in a GIF 600 ice cream freezer (Gram Equipment A/S, Denmark) with a cylinder pressure of 3 bar and the following parameters:

| Parameter | Vanilla | Apple-cinnamon | Blueberry | Strawberry-rhubarb |
|---|---|---|---|---|
| Relative dasher speed¹ | 100 | 100 | 160 | 160 |
| Liters of mix / hour | 100 | 100 | 160 | 160 |
| Liters of ice cream / hour | 160 | 160 | 260 | 260 |
| Overrun (%) | 60 | 60 | 63 | 63 |
| Viscosity | 40 | 40 | 80 | 80 |
| Exit temperature (°C) | -5.2 | -5.9 | -5.2 | -5.2 |

| | | | | |
|---|---|---|---|---|
| ¹ 100=50 Hz=360 rpm; 160=80 Hz=576 rpm. | | | | |

"Overrun" is the percentage of difference in volume between ice cream mix and resulting ice cream, reflecting how much air has been incorporated into the ice cream.

"Viscosity", which is reverse proportional to the exit temperature, is here presented in relative terms reflecting the amount of power needed for the shear step.

### EXAMPLE 2

Ice cream based on any of the above flavourings is produced as described in Example 1, except for homogenising the pre-mix at 75-80 °C and 130-150 bar, and using a relative dasher speed of 160.

The relative amounts of ice cream mix and fruit are 75% and 25%, respectively.

### EXAMPLE 3

An ice cream mix was prepared from the following ice cream formulation:

| Ingredient | Weight (kg) | Weight percentage |
|---|---|---|
| Milk (3.5%) | 506.7401 | 50.67 |
| Cream (38%) | 245.9904 | 24.60 |
| Sucrose | 147.5942 | 14.76 |
| Egg yolks (pasteurized) | 54.1179 | 5.41 |
| Egg whites (pasteurized) | 29.5188 | 2.95 |
| Honey | 15.7434 | 1.57 |
| Salt | 0.2952 | 0.03 |

All pre-mix of all ingredients was homogenized at a temperature of 75 °C and a pressure of 130 bar, and pasteurized at 85 °C.

The mixture was then frozen to a temperature of -5.5 °C at a shear rate of 60 % above STANDARD (where STANDARD is 50 Hz corresponding to 360 rpm), i.e., 576 rpm.

### LIST OF REFERENCES

www.foodsci.uoguelph.ca/dairyedu/icmanu.html
Marshall, Robert T., et al., "Ice Cream", 6th Ed., 2003 (Kluwer Academic/Plenum Publishers).

## Claims

1. A process for the preparation of an ice cream product, wherein said product does not contain any artificial emulsifiers, stabilisers or milk powder, comprising the steps:
(a) homogenising a premix comprising milk and/or cream, egg ingredients, one or more natural sweeteners and optionally salt and at a temperature in the range of 75 °C to 85 °C and a pressure in the range of 125-175 bar;
(b) cooling the mixture obtained to a temperature in the range 2-10 °C;
(c) optionally adding any natural flavours and/or fruit/vegetable compositions;
(d) freezing the resulting mixture at a temperature of -3 °C to -10 °C in an ice cream making device defining an inlet and an outlet, by:
i. feeding the resulting mixture into the inlet,
ii. mixing the resulting mixture inside the ice cream making device by operating the mixing device such that the resulting mixture is scraped off the inner surface at least every tenth of a seconds (1/10 sec) or wherein the screw rotation rate is higher than 360 rpm, and
iii. outputting the resulting ice cream through the outlet; and
(e) subjecting the product of step d) to freezing at a temperature in the range of-11 °C to - 40 °C.

2. The process according to claim 1, wherein the ice cream making device comprises a mixing device and wherein in step ii) mixing the resulting mixture inside the ice cream making device comprises the step of operating the mixing device so as to move the resulting mixture at a velocity of at least 1500 mm/s along an inner surface of the ice cream mixing device.

3. The process according to any one of the preceding claims, wherein the premix comprises 40-60 % by weight, such as about 50% by weight, of milk with a fat content of about 3.5%.

4. The process according to any one of the preceding claims, wherein the egg ingredients comprise separately added egg yolks and egg whites.

5. The process according to anyone of the preceding claims, wherein salt is included in the premix in an amount below about 0.05% by weight, such as from 0.01 to 0.05% by weight, such as about 0.03% by weight.

6. The process according to any one of the preceding claims, wherein the one or more natural sweeteners comprise sucrose (saccharose), dextrose, fructose, honey, or any mixture thereof.

7. The process according to any one of the preceding claims, wherein the premix in step a) is prepared by combining milk and/or cream, and egg ingredients, which are heated to a temperature in the range of 40 °C to 60 °C, whereupon one or more natural sweeteners are added.

8. The process according to any one of the preceding claims, wherein the natural flavours are selected from the group consisting of vanilla, cinnamon, ginger, star anis, chili, mint, chocolate, cocoa, herbs, malt, nuts, almonds, caramelized sugar, honey, syrup, and any combination thereof, and the fruit/vegetable compositions are selected from the group consisting of fruit pastes and fruit syrups.

9. The process according to any one of the preceding claims, wherein in step b) the mixture is cooled to a temperature in the range 4-7 °C, such as about 5 °C, for a period of time in the range of 4-30 hours, such as 6-24 hours, such as 12-24 hours, such as 18-24 hours.

10. The process according to any one of the preceding claims, wherein in step d) the mixture is cooled to a temperature in the range of -4 °C to -8 °C, such as -5 °C to - 6 °C, for a period of time in the range of 4-24 hours.

11. The process according to claim 1, wherein the egg ingredients comprise separately added egg yolks and egg whites.

12. The process according to any one of the preceding claims, wherein the freezing in step e) is performed at a temperature in the range of -12 °C to -35 °C, such as about -15 °C to about -30 °C, such as about -18 °C to about -25 °C.

13. The process according to any one of the preceding claims, which is a continuous process.

14. An ice-cream product, wherein said product contains no artificial emulsifiers, stabilisers or milk powder, obtainable by the process according to anyone of claims 1-13.

## Patentansprüche

1. Verfahren zum Herstellen eines Eiscremeprodukts, wobei das Produkt keine künstlichen Emulgatoren, Stabilisatoren oder Milchpulver enthält, umfassend die Schritte:
(a) Homogenisieren einer Vormischung, die Milch und/oder Sahne, Eibestandteile, ein oder mehrere natürliche Süßungsmittel und gegebenenfalls Salz umfasst, bei einer Temperatur im Bereich von 75 °C bis 85 °C und einem Druck im Bereich von 125-175 bar;
(b) Abkühlen des erhaltenen Gemischs auf eine Temperatur im Bereich von 2-10 °C;
(c) gegebenenfalls Zugeben von natürlichen Aromen und/oder Frucht-/pflanzlichen Zusammensetzungen;
(d) Einfrieren des erhaltenen Gemischs auf eine Temperatur von -3 °C bis -10 °C in einer Eiscremeherstellungsvorrichtung, die einen Einlass und einen Auslass aufweist, durch:
i. Einspeisen des erhaltenen Gemischs in den Einlass,
ii. Mischen des erhaltenen Gemischs im Inneren der Eiscremeherstellungsvorrichtung durch derartiges Betreiben der Mischvorrichtung, dass das erhaltene Gemisch wenigstens jede Zehntelsekunde (1/10 s) von der Innenoberfläche abgeschabt wird, oder wobei die Schnecken-Rotationsgeschwindigkeit höher als 360 UpM ist, und
iii. Ausstoßen der erhaltenen Eiscreme durch den Auslass; und
(e) Unterwerfen des Produkts von Schritt d) an Einfrieren bei einer Temperatur im Bereich von -11 °C bis -40 °C.

2. Verfahren gemäß Anspruch 1, wobei die Eiscremeherstellungsvorrichtung eine Mischvorrichtung umfasst und wobei bei Schritt ii) Mischen des erhaltenen Gemischs im Inneren der Eiscremeherstellungsvorrichtung den Schritt des derartigen Betreibens der Mischvorrichtung umfasst, dass das erhaltene Gemisch mit einer Geschwindigkeit von wenigstens 1500 mm/s entlang einer Innenoberfläche der Eiscrememischvorrichtung bewegt wird.

3. Verfahren gemäß einem der vorstehenden Ansprüche, wobei die Vormischung 40-60 Gew.-%, wie z. B. etwa 50 Gew.-%, an Milch mit einem Fettgehalt von etwa 3,5 % umfasst.

4. Verfahren gemäß einem der vorstehenden Ansprüche, wobei die Eibestandteile getrennt zugegebenes Eigelb und Eiweiß umfassen.

5. Verfahren gemäß einem der vorstehenden Ansprüche, wobei in der Vormischung Salz in einer Menge von unter etwa 0,05 Gew.-%, wie z. B. von 0,01 bis 0,05 Gew.-%, wie z. B. etwa 0,03 Gew.-%, enthalten ist.

6. Verfahren gemäß einem der vorstehenden Ansprüche, wobei das eine oder die mehreren natürlichen Süßungsmittel Sucrose (Saccharose), Dextrose, Fructose, Honig oder ein beliebiges Gemisch davon umfasst/umfassen.

7. Verfahren gemäß einem der vorstehenden Ansprüche, wobei die Vormischung in Schritt a) durch Kombinieren von Milch und/oder Sahne und Eibestandteilen, Erwärmen davon auf eine Temperatur im Bereich von 40 °C bis 60 °C und anschließendes Zugeben von einem oder mehreren natürlichen Süßungsmitteln hergestellt wird.

8. Verfahren gemäß einem der vorstehenden Ansprüche, wobei die natürlichen Aromen ausgewählt sind aus der Gruppe bestehend aus Vanille, Zimt, Ingwer, Sternanis, Chili, Minze, Schokolade, Kakao, Kräutern, Malz, Nüssen, Mandeln, karamellisiertem Zucker, Honig, Sirup und beliebigen Kombinationen davon und die Frucht-/pflanzlichen Zusammensetzungen ausgewählt sind aus der Gruppe bestehend aus Fruchtpasten und Fruchtsirupen.

9. Verfahren gemäß einem der vorstehenden Ansprüche, wobei bei Schritt b) das Gemisch über einen Zeitraum im Bereich von 4-30 Stunden, wie z. B. 6-24 Stunden, wie z. B. 12-24 Stunden, wie z. B. 18-24 Stunden, auf eine Temperatur im Bereich von 4-7 °C, wie z. B. etwa 5 °C, gekühlt wird.

10. Verfahren gemäß einem der vorstehenden Ansprüche, wobei bei Schritt d) das Gemisch über einen Zeitraum im Bereich von 4-24 Stunden auf eine Temperatur im Bereich von -4 °C bis -8 °C, wie z. B. -5 °C bis -6 °C, gekühlt wird.

11. Verfahren gemäß Anspruch 1, wobei die Eibestandteile getrennt zugegebenes Eigelb und Eiweiß umfassen.

12. Verfahren gemäß einem der vorstehenden Ansprüche, wobei das Einfrieren bei Schritt e) bei einer Temperatur im Bereich von -12 °C bis -35 °C, wie z. B. etwa -15 °C bis etwa -30 °C, wie z. B. etwa -18 °C bis etwa -25 °C, durchgeführt wird.

13. Verfahren gemäß einem der vorstehenden Ansprüche, das ein kontinuierliches Verfahren ist.

14. Eiscremeprodukt, wobei das Produkt keine künstlichen Emulgatoren, Stabilisatoren oder Milchpulver enthält, erhältlich durch das Verfahren gemäß einem der Ansprüche 1-13.

## Revendications

1. Procédé pour la préparation d'un produit de type crème glacée, dans lequel ledit produit ne contient pas de quelconques émulsifiants artificiels, de stabilisants ou de poudre de lait, comprenant les étapes :
(a) homogénéisation d'un prémélange comprenant du lait et/ou de la crème, des ingrédients d'oeufs, un ou plusieurs édulcorants naturels et facultativement du sel et à une température dans la plage de 75 °C à 85 °C et une pression dans la plage de 125-175 bar ;
(b) refroidissement du mélange obtenu à une température dans la plage de 2-10 °C ;
(c) facultativement ajout de quelconques arômes naturels et/ou compositions de fruits/légumes ;
(d) congélation du mélange résultant à une température de -3 °C à -10 °C dans un dispositif de fabrication de crème glacée délimitant une entrée et une sortie, par :
i. introduction du mélange résultant dans l'entrée,
ii. mélange du mélange résultant à l'intérieur du dispositif de fabrication de crème glacée par fonctionnement du dispositif de mélange de façon à ce que le mélange résultant soit gratté de la surface interne au moins tous les dixièmes de seconde (1/10 s) ou dans lequel la vitesse de rotation de la vis est supérieure à 360 tr/min et
iii. sortie de la crème glacée résultante par la sortie ; et
(e) soumission du produit de l'étape d) à une congélation à une température dans la plage de -11 °C à -40 °C.

2. Procédé selon la revendication 1, dans lequel le dispositif de fabrication de crème glacée comprend un dispositif de mélange et dans lequel dans l'étape ii) le mélange du mélange résultant à l'intérieur du dispositif de fabrication de crème glacée comprend l'étape consistant à faire fonctionner le dispositif de mélange afin de déplacer le mélange résultant à une vitesse d'au moins 1500 mm/s le long d'une surface interne du dispositif de mélange de crème glacée.

3. Procédé selon l'une quelconque des revendications précédentes, dans lequel le prémélange comprend 40-60 % en poids, comme environ 50 % en poids, de lait ayant une teneur en matière grasse d'environ 3,5 %.

4. Procédé selon l'une quelconque des revendications précédentes, dans lequel les ingrédients d'oeufs comprennent des jaunes d'oeufs et des blancs d'oeufs ajoutés séparément.

5. Procédé selon l'une quelconque des revendications précédentes, dans lequel du sel est inclus dans le prémélange en une quantité au-dessous d'environ 0,05 % en poids, comme de 0,01 à 0,05 % en poids, comme environ 0,03 % en poids.

6. Procédé selon l'une quelconque des revendications précédentes, dans lequel le ou les édulcorants naturels comprennent du sucre ordinaire (saccharose), du dextrose, du fructose, du miel ou un quelconque mélange de ceux-ci.

7. Procédé selon l'une quelconque des revendications précédentes, dans lequel le prémélange dans l'étape a) est préparé par combinaison de lait et/ou de crème et d'ingrédients d'oeufs, qui sont chauffés à une température dans la plage de 40 °C à 60 °C, après quoi un ou plusieurs édulcorants naturels sont ajoutés.

8. Procédé selon l'une quelconque des revendications précédentes, dans lequel les arômes naturels sont choisis dans le groupe constitué par la vanille, la cannelle, le gingembre, l'anis étoilé, le chili, la menthe, le chocolat, le cacao, les herbes aromatiques, le malte, les noix, les amandes, le sucre caramélisé, le miel, le sirop et une quelconque association de ceux-ci et les compositions de fruits/légumes sont choisies dans le groupe constitué par les pâtes de fruits et les sirops de fruits.

9. Procédé selon l'une quelconque des revendications précédentes, dans lequel dans l'étape b) le mélange est refroidi à une température dans la plage de 4-7 °C, comme environ 5 °C, pendant une durée dans la plage de 4-30 heures, comme 6-24 heures, comme 12-24 heures, comme 18-24 heures.

10. Procédé selon l'une quelconque des revendications précédentes, dans lequel dans l'étape d) le mélange est refroidi à une température dans la plage de -4 °C à -8 °C, comme -5 °C à -6 °C, pendant une durée dans la plage de 4-24 heures.

11. Procédé selon la revendication 1, dans lequel les ingrédients d'oeufs comprennent des jaunes d'oeufs et des blancs d'oeufs ajoutés séparément.

12. Procédé selon l'une quelconque des revendications précédentes, dans lequel la congélation dans l'étape e) est effectuée à une température dans la plage de -12 °C à -35 °C, comme environ -15 °C à environ -30 °C, comme environ -18 °C à environ -25 °C.

13. Procédé selon l'une quelconque des revendications précédentes, qui est un procédé continu.

14. Produit de type crème glacée, ledit produit ne contenant pas d'émulsifiants artificiels, de stabilisants ou de poudre de lait, pouvant être obtenu par le procédé selon l'une quelconque des revendications 1-13.
